# NEW EUROPEAN PATENT SPECIFICATION

(11) **EP 2 948 348 B2**
(45) Date of publication and mention of the opposition decision: **22.02.2023**
(45) Mention of the grant of the patent: 14.08.2019
(21) Application number: 14742956.7
(22) Date of filing: 27.01.2014
(51) Int. Cl.: F16D 25/10, B60T 1/087, B60T 10/02, F16D 57/04, F16D 65/14, F16D 23/04, F16D 25/0638, F16D 25/061

(54) **RETARDER COMPRISING A CLUTCH DEVICE, VEHICLE COMPRISING SUCH A RETARDER AND METHOD FOR CONNECTION OF A RETARDER**
RETARDER UMFASSEND EINE KUPPLUNGSVORRICHTUNG, FAHRZEUG MIT SOLCH EINEM RETARDER UND VERFAHREN ZUR VERBINDUNG EINES RETARDERS
RALENTISSEUR COMPRENANT UN DISPOSITIF D'EMBRAYAGE, VÉHICULE COMPRENANT UN TEL RALENTISSEUR ET PROCÉDÉ POUR CONNECTER UN RALENTISSEUR

(30) Priority: 28.01.2013 SE 1350084
(43) Date of publication of application: 02.12.2015
(73) Proprietor: Scania CV AB, 151 87 Södertälje (SE)
(72) Inventor: SLAPAK, Dieter, S-151 47 Södertälje (SE)
(86) International application number: PCT/SE2014/050095
(87) International publication number: WO 2014/116177

(56) References cited:
- EP-A1- 2 055 974
- EP-A2- 1 810 867
- EP-A2- 2 088 343
- EP-B1- 1 697 652
- WO-A1-86/02608
- WO-A1-2006/110945
- WO-A1-2013/083322
- WO-A1-2013/135423
- DE-A1- 4 445 024
- DE-A1- 10 305 239
- DE-A1- 19 751 776
- DE-A1-102009 001 146
- DE-A1-102009 050 672
- DE-A1-102011 017 762
- DE-A1-102011 106 444
- FR-A1- 2 899 297
- GB-A- 194 739
- GB-A- 1 424 704
- GB-A- 2 371 607
- JP-A- S61 109 917
- JP-U- S 576 826
- US-A- 3 777 860

## Description

### BACKGROUND AND PRIOR ART

The present invention pertains to a retarder according to the preamble of patent claim 1, a vehicle comprising such a retarder according to the preamble to patent claim 11, and a method for the connection of a retarder according to the preamble to patent claim 12.

A retarder is used to brake a driving source, such as a vehicle. Often the retarder consists of an auxiliary brake, which complements the wheel brakes of the vehicle. Thus excessive wear of the wheel brakes is avoided. The retarder is connected to the vehicle's gearbox or propeller shaft via a transmission. In order to reduce energy losses and thus reduce the vehicle's fuel consumption, the transmission and the retarder are disconnected from the gearbox or the propeller shaft when the retarder is disengaged and does not have to brake the vehicle. The retarder shaft stands still when the retarder is not engaged.

The retarder's rotor and stator form a torus, which must be filled with a fluid as quickly as possible when a braking effect from the retarder is desired. A slow filling initially entails a lack of a braking effect from the retarder, which entails an exaggerated use of the vehicle's wheel brakes which will be exposed to unnecessary wear.

In order to expedite the filling of the torus, a fluid with low viscosity may be used, such as water. In the event that a clutch device, which is used for the connection and disconnection of the retarder on the gearbox or the propeller shaft, comprises a synchronisation device with synchronisation rings, the connection and disconnection of the transmission on the gearbox or propeller shaft is more difficult when the torus of the retarder is filled with water. The speed difference between the different components that are connected with each other entails a substantial heat development in the synchronisation device, which is thus subject to substantial wear and tear. In the event that the torus is not fully drained before the connection of the retarder, the engaging torque becomes very high, which leads to great stress on the synchronisation device. Thus the retarder's braking effect may be delayed or absent due to a worn-out synchronisation device. In order to counteract this, the synchronisation device may be dimensioned to resist such wear and tear, but this entails a weight increase, which is not desirable.

The document US-A-3777860 shows a retarder for vehicles with a rotor and a stator, at which the rotor is installed to connect and disconnect the vehicle's driving shaft with a clutch device which is controlled automatically depending on the activation of the vehicle brake.

The document DE-A1-10305239 shows a retarder for vehicles where the drive comprises a form bound clutch device. The form bound clutch device interacts with the vehicle's main clutch.

### SUMMARY OF THE INVENTION

Despite prior art solutions, there is a need to further develop a clutch device for a retarder which does not significantly encumber a driving source when it is disengaged, but which has a low weight and which is engaged for a very short period of time when the retarder exerts a braking effect on the driving source.

The objective of the invention is thus to provide a clutch device for a retarder with increased life and reliability.

Another objective of the invention is to provide a clutch device for a retarder which, when disengaged, exerts a substantially zero braking torque on the driving source.

Another objective of the invention is to provide a clutch device for a retarder which reduces the fuel consumption of a vehicle.

Another objective of the present invention is to provide a clutch device for a retarder with a short activation period.

Another objective of the invention is to provide a clutch device designed for a retarder, which contributes to a compact design of the retarder.

These objectives are achieved with a retarder of the type specified at the beginning, which is characterised by the features specified in the patent claim 1.

Such a clutch device reduces the retarder's activation time considerably when the retarder is connected, at the same time as the clutch device is subject to low wear and tear, which entails an increased service life and reliability of the clutch device. The clutch device entails that the retarder in a disengaged state exerts a substantially zero braking torque on the driving source, which thus reduces the fuel consumption of a vehicle. The clutch elements' interaction with the first and the second shafts entails a compact design of the retarder. The retarder's weight is thus reduced, which entails that the fuel consumption of the vehicle may be reduced.

The above specified objectives are achieved also with a vehicle of the type mentioned above, which is characterised by the features specified in patent claim 11. The retarder permits a brief activation time and, when disengaged, exerts a substantially zero torque on the vehicle in order thus to reduce the fuel consumption. The controlled connection and disconnection of the retarder via the clutch device also entails that its service life and reliability increases. The small dimensions of the retarder, which arise through the clutch elements' interaction with the first and second shafts, entail a compact design of the retarder. The retarder's weight is thus reduced, which entails that the fuel consumption of the vehicle may be reduced.

The above objectives are achieved also with a method for the connection of a retarder of the type specified at the beginning, which is characterised by the features specified in the patent claim 12.

Other advantages of the invention are set out in the detailed description below.

### BRIEF DESCRIPTION OF DRAWINGS

Below is a description, as an example, of preferred embodiments of the invention with reference to the enclosed drawings, in which:
- Fig. 1: shows a schematic side view of a vehicle with a clutch device for a retarder according to the present invention,
- Fig. 2: shows a section view of a first embodiment of a clutch device for a retarder, according to the present invention, in a disconnected state,
- Fig. 3: shows a section view of the first embodiment of the clutch device for a retarder, according to the present invention, in a connected state,
- Fig. 4: shows a section view of a second embodiment of a clutch device for a retarder, according to the present invention, and
- Fig. 5: shows a flow chart of a method for connection of a retarder according to the present invention.

### DETAILED DESCRIPTION OF A PREFERRED EMBODIMENT OF THE INVENTION

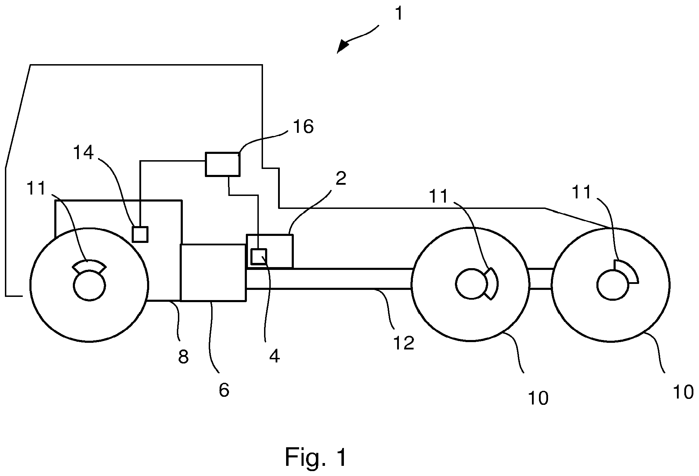

Fig. 1 shows a schematic side view of a vehicle 1, the vehicle 1 of which is equipped with a retarder 2, which is connected and disconnected with a clutch device 4 according to the present invention. The vehicle 1 is also equipped with a gearbox 6, which is connected to a combustion engine 8, which drives the driving wheels 10 of the vehicle 1 via the gearbox 6 and a conventional transmission comprising, among others, a propeller shaft 12. The driving wheels 10 are equipped with wheel brakes 11. A torque sensor 14 is arranged on the combustion engine 8 in order to detect the torque emitted from the combustion engine 8. The torque sensor 14 is connected to a control device 16, which is arranged to control the retarder 2.

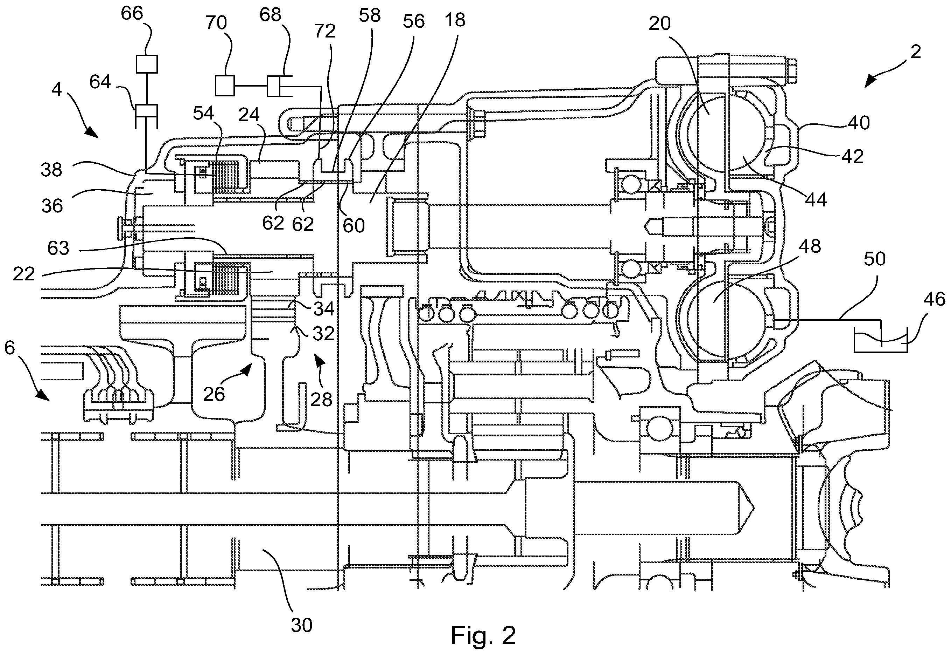

Fig. 2 shows a section view of a clutch device 4 for a retarder 2, according to a first embodiment of the present invention, in a disconnected state. The clutch device 4 comprises a first shaft 18, which is connected with a rotor 20 of the retarder 2 and a second shaft 22, which is arranged to engage with a driving source. According to the embodiment shown in Fig. 2, the driving source constitutes the vehicle 1, where the connection of the retarder 2 with the vehicle 1 is carried out via the gearbox 6. The second shaft 22 is equipped with teeth 24 for engagement with a transmission 26 arranged at the gearbox 6, which comprises a gear drive 28 between the output shaft 30 and the second shaft 22 of the gearbox 6. The gear drive 28 comprises the first and second cogwheels 32, 34 in engagement with each other.

The first cogwheel 32 is arranged on the output shaft 30 of the gearbox 6, and the second cogwheel 34 is arranged between the first cogwheel 32 and the second shaft 22. The first and second cogwheels 32, 34 and the second shaft 22 are in constant engagement with each other. Preferably, a gearing through the gear drive 28 in the ratio 3:1 occurs, but other gearings are also possible, e.g. 1:1.

The first shaft 18 is preferably journalled, through a bearing 36, in a gearbox house 38 and in a retarder house 40. On the first shaft 18 the rotor 20 is arranged, which in a connected state rotates with a speed which is proportionate to the speed of the output shaft 30 of the gearbox 6. A stator 42 is connected to the retarder housing 40 and will therefore not rotate.

The rotor 20 and the stator 42 jointly form a toroidal void shape, which is called torus 44, which is filled with a fluid 46, such as water, when the retarder 2 carries out a braking torque on the output shaft 30 of the gearbox 6 in order to brake the vehicle 1 to thus reduce the vehicle's 1 speed. The braking effect arises since the rotor 20 and the stator 42 are equipped with blades or shovels 48, which create a fluid flow in the torus 44 when the rotor 20 rotates. The fluid flow creates, in interaction with the shovels 48 of the rotor 20 and the stator 42, a reaction force which forms the braking effect. The greater the revolutions of the rotor 20, the greater the reaction force. On occasions when the retarder 2 does not have to brake the vehicle 1, the torus 44 is drained of fluid 46, which entails that the shovels 48 of the rotor 20 and the stator 42 will create an air flow in the torus 44. The air flow causes an undesirable reaction force on the first shaft 18, which generates a braking torque on the output shaft 30 of the gearbox 6. The braking torque from the retarder 2 entails that the fuel consumption of the vehicle 1 increases when the combustion engine 8 of the vehicle 1 exerts a torque. The friction from the first shaft's 18 bearings emits a reaction force, which entails an increased fuel consumption. For this reason, the first shaft 18 may be disconnected from the output shaft 30 of the gearbox 6 when the retarder 2 is not used to brake the vehicle 1. Thus the fuel consumption of the vehicle 1 may be reduced. Filling and draining of torus 44 with fluid 46 is via a fluid circuit.

The torus 44 must be filled with fluid 46 as quickly as possible when the braking effect from the retarder 2 is desired. A slow filling initially entails a lack of a braking effect from the retarder 2, which entails an exaggerated use of the wheel brakes of the vehicle 1, which will be exposed to unnecessary wear.

The clutch device 4 according to the invention entails that the first shaft 18 and thus the retarder 2 may be disconnected from the gearbox 6, which entails that the retarder 2 does not have a braking effect on the vehicle 1 when the retarder 2 is disengaged. When the retarder 2 is to be engaged, the retarder 2 must in a quick and efficient manner be connected mechanically with the output shaft 30 of the gearbox 6. In order to achieve this, a first and a second clutch element 54, 56 is arranged between the first and second shafts 18, 22. According to the first embodiment, the first clutch device 54 is a friction clutch of the multi-plate clutch type. The second clutch element 56 is, according to the embodiment displayed, a claw clutch of the form bound type. The second clutch device 56 comprises an axially shiftable sleeve 58, which is equipped with teeth 60 which are adapted to engage with corresponding teeth 62 on the first and second shafts 18, 22. The second shaft 22 is arranged co-axially with the first shaft 18 and the second shaft 22 is preferably arranged through rolling bearings 63 on the first shaft 18.

When the retarder 2 is to be engaged in order to brake the vehicle 1, the clutch device 4 is thus engaged, so that the first shaft 18 is connected with the second shaft 22 via the first clutch element 54. Since the second shaft 22 rotates from the start and the first shaft 18 stands still, the first clutch element 54 will make the first shaft 18 rotate. The first clutch element 54 is applied by a first power element 64, which may be a pneumatic or a hydraulic cylinder, or an electric engine, the first power element 64 of which is connected to the control device 16, which impacts a first valve 66 or a switch to the first power element 64. The first clutch element 54 is, according to the embodiment, a multi-plate clutch, which through friction connects the first and the second shafts 18, 22. The first power element 64 may also be built into the multi-plate clutch, and with a piston act directly on the discs in the multi-plate clutch. The multi-plate clutch will, however, not be able to transmit the braking torque which arises when the retarder 2 is to brake the vehicle 1. For this reason, the second clutch element 56 is connected, which consists of a form shaped clutch, such as a claw clutch. The second clutch element 56 is dimensioned to be able to transfer the large braking torque which is exerted by the retarder 2. The connection of the claw clutch is carried out through a second power element 68, which may be a pneumatic or a hydraulic cylinder, or an electric engine, the second power element 68 of which is connected to the control device 16, which influences a second valve 70 or a switch to the second power element 68.

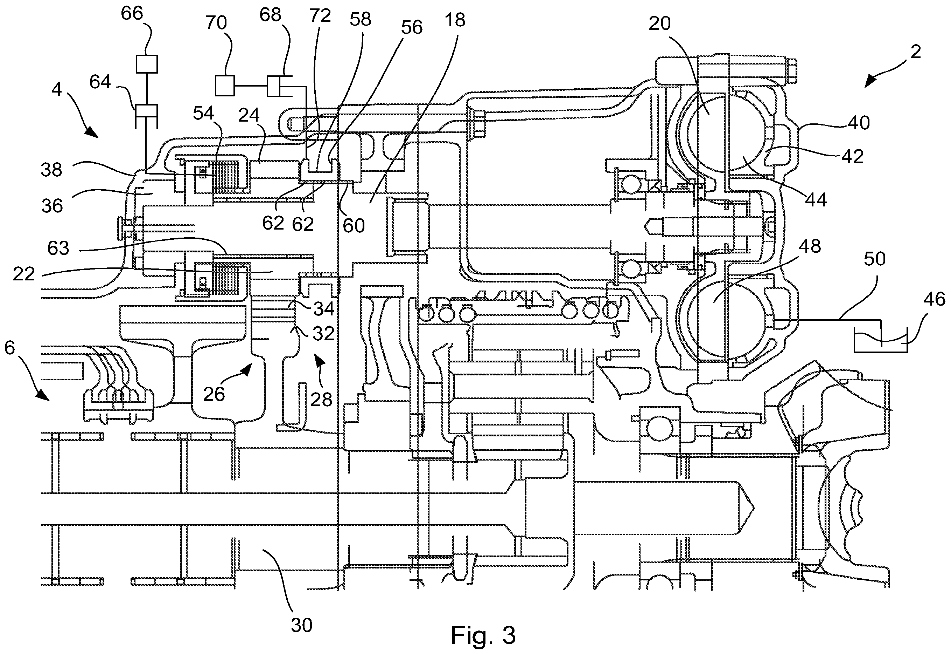

Fig. 3 shows a section view of the first embodiment of the clutch device 4 for a retarder 2, according to the present invention, in a connected state. The claw clutch, which comprises a sleeve 58 has been displaced on the first shaft 18 in a direction toward the second shaft 22 and engages with teeth 62, which are designed on the periphery of the second shaft 22. The corresponding teeth 62 also exist on the periphery of the first shaft 18, so that the sleeve 58, with its internal teeth 60 in a form-bound manner, connects the first and the second shafts 18, 22 with each other.

When the sleeve 58 is displaced to connect the first and second shafts 18, 22 with each other, the first clutch element 54 must be released at the same time as the sleeve 58 is to engage with the teeth 62 on the second shaft 22. This clutch manoeuvre is achieved with the power elements 64, 68 controlled by the control device. The first and second power elements 64, 68, in order to control the first and second clutch elements, may be designed in different ways. According to the first embodiment, the second power element 68 is preferably connected to a manoeuvring fork 72, which engages with the sleeve 58 and moves the sleeve 58 between the connected and disconnected positions.

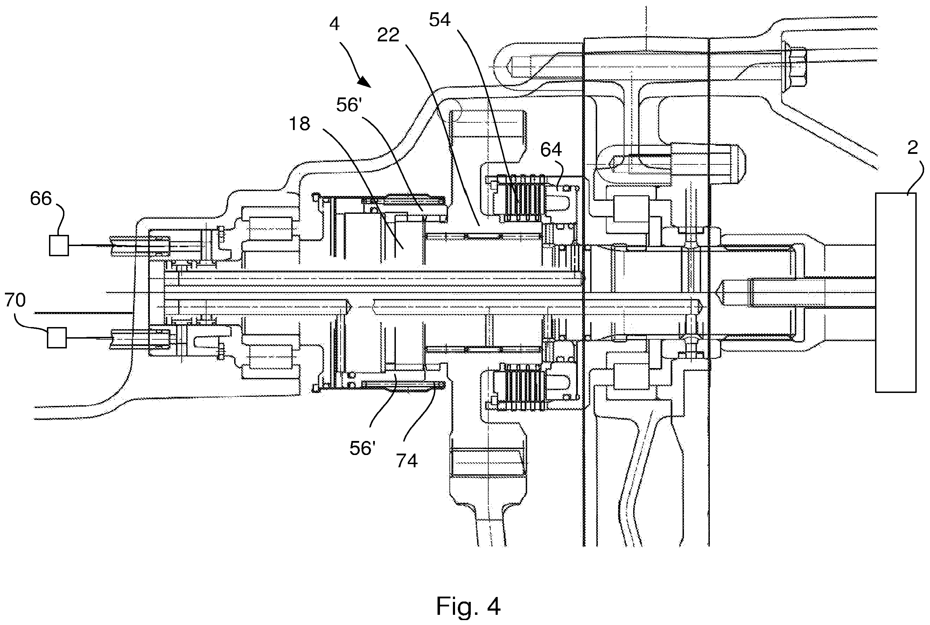

Fig. 4 shows a section view of a second embodiment of a clutch device for a retarder according to the present invention. The first and second embodiments differ from the first embodiment in that the power element 68' is one entity connected with the second clutch element 58' where the second power element 68' operate in an axial direction in order to connect the first and second shafts 18, 22 with the second clutch element 58', and where a return spring 74 operates to disconnect the first and second shafts 18, 22. Fig. 4 shows the retarder 2 only schematically arranged at the first shaft 18. When the retarder 2 is to be engaged in order to brake the vehicle 1, the clutch device 4 is thus engaged, so that the first shaft 18 is connected with the second shaft 22 via the first clutch element 54. Since the second shaft 22 rotates from the start and the first shaft 18 stands still, the first clutch element 54 will make the first shaft 18 rotate. The first clutch element 54 is applied by a first power element 64, which may be a pneumatic or a hydraulic cylinder, or an electric engine, the first power element 64 of which is connected to the control device 16, which impacts a first valve 66 or a switch to the first power element 64. When the first valve 66 is impacted, a fluid in the form of compressed air or hydraulic fluid is led through a first central channel 76 formed in the first shaft 18, which extends in the longitudinal direction of the first shaft 18. The fluid is led through the first central channel 76 and further to the first power element 64. The first clutch element 54 is, according to the second embodiment, a multi-plate clutch which connects the first and the second shafts 18, 22 through friction. The first power element 64 is, in the displayed embodiment, in-built in the multi-plate clutch. The multi-plate clutch will, however, not be able to transmit the braking torque which arises when the retarder 2 is to brake the vehicle 1. For this reason, the second clutch element 56' is connected, which, according to the second embodiment, consists of a form bound clutch such as a claw clutch. The second clutch element 56' is dimensioned to be able to transfer the substantial braking torque which is exerted by the retarder 2. The connection of the claw clutch is carried out through the second power element 68', which may be a pneumatic or a hydraulic cylinder, where the claw clutch consists of a circular case shaped piston. The second power element 68' is connected to the control device 16, which impacts a second valve 70 or a switch of the second power element 68'. When the second valve 70 is impacted, a fluid in the form of compressed air or hydraulic fluid is led through a second central channel 78 formed in the first shaft 18, which extends in the longitudinal direction of the first shaft 18. The fluid is led through the second central channel 78 and further to the second power element 68'. Above the first and the second shafts' 18, 22 central shaft, the second clutch element 56' is displayed in a connected position between the first and the second shafts 18, 22, and below the central shaft the second clutch element 56' is displayed in a disconnected position between the first and the second shafts 18, 22.

When the second clutch element 56, 56' is connected, the retarder's 2 torus 44 is filled with fluid 46, which entails that the retarder 2 will exert a braking action on the vehicle 1, as described above. According to the above, the retarder 2 is described as being arranged at a vehicle 1 in order to brake the vehicle 1, but it is also possible to use the retarder 2 according to the present invention for other applications. According to the above, the vehicle 1, the combustion engine 8, the gearbox 6 or the propeller shaft 12 may constitute a driving source, which is connected directly or indirectly to the retarder 2. Other driving sources may, however, be connected to the retarder 2.

By arranging the first and the second clutch elements 56, 56', 58, 58' on each side of the second shaft 22 in the second shaft's 22 longitudinal direction, the dimensions of the clutch device 4, and thus the dimensions of the retarder 2, may be reduced, which entails a weight reduction in the retarder 2 and also the vehicle 1 in which the retarder 2 is mounted. The fuel consumption of the vehicle 1 may thus be reduced. Preferably, the first and second clutch elements 56, 56', 58, 58' are arranged on each side of the teeth 24 in the longitudinal direction of the second shaft 22.

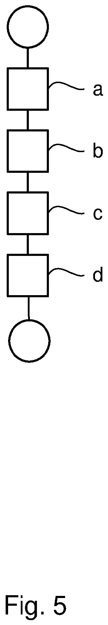

The method for the connection of the retarder 2, according to the present invention, is described below jointly with the flow chart in Fig. 5, the method of which comprises the steps:
a) to actuate the first clutch element 54, so that the second shaft 22 brings the first shaft 18 to rotate with the same speed as the second shaft 22;
b) to actuate a second clutch element 56, 56', which connects the first and the second shafts 18, 22 with each other, and
c) to engage the retarder 2 by adding fluid 46 to the rotor 20.

The method also comprises the additional step: d) to release the first clutch element 54 while the second clutch element 56, 56' is actuated to connect the first and the second shafts 18, 22.

The components and features specified above may within the framework of the invention be combined between different embodiments specified.

## Claims

1. Retarder (2) comprising a clutch device (4), said clutch device (4) comprising a first shaft (18), which is connected with a rotor (20) of the retarder (2);
a second shaft (22), which is arranged to engage with a driving source (1); and
a first clutch element (54) arranged between the first and the second shafts (18, 22); **characterised in that**
a second clutch element (56; 56') is arranged between the first and the second shafts (18, 22); the first clutch element (54) is a multi-plate clutch; and the second clutch element (56; 56') is a form-bound clutch, such as a claw clutch.

2. Retarder according to claim 1, **characterised in that**
a first central channel (76) is arranged in the first shaft (18), the first central channel (76) of which is designed to house a fluid to control the first clutch element (54).

3. Retarder according to any of the previous claims, **characterised in that** the second clutch element (56; 56') comprises an axially shiftable sleeve (58), which is equipped with teeth (60) which are adapted to engage with corresponding teeth (62) on the first and second shafts (18, 22).

4. Retarder according to any of the previous claims, **characterised in that** a second central channel (78) is arranged in the first shaft (18), the second central shaft (78) of which is designed to house a fluid to control the second clutch element (56; 56').

5. Retarder according to any of the previous claims, **characterised in that** the second shaft (22) is equipped with teeth (24) for engagement with a cogwheel (32) arranged in the driving source (1).

6. Retarder according to claim 5, **characterised in that** the first and second clutch elements (56, 56', 58, 58') are arranged on each side of the teeth (24) in the longitudinal direction of the second shaft (22).

7. Retarder according to any of the previous claims, **characterised in that** the second shaft (22) is arranged co-axially with the first shaft (18).

8. Retarder according to any of the previous claims, **characterised in that** the second shaft (22) is journaled, arranged on the first shaft (18) via rolling bearings (63).

9. Retarder according to any of the previous claims, **characterised in that** the first and second clutch elements (56, 56', 58, 58') are arranged on each side of the second shaft (22) in the longitudinal direction of the second shaft (22).

10. Retarder according to any of the previous claims, **characterised in that** the driving source is the vehicle (1).

11. Vehicle (1), **characterised in that** it comprises a retarder (4) according to any of the previous claims.

12. Method for connection of a retarder (2), the retarder comprising a first shaft (18), which is connected with a rotor (20) of the retarder (2); a second shaft (22), which is arranged to engage with a driving source (1); and a first clutch element (54) arranged between the first and the second shafts (18, 22), which is a multi-plate clutch; the method being **characterised by** the steps:
a) to actuate the first clutch element (54), so that the second shaft (22) brings the first shaft (18) to rotate with the same speed as the second shaft (22);
b) to actuate a second clutch element (56, 56'), which is a form-bound clutch, such as a claw clutch, and connects the first and the second shafts (18, 22), and
c) to engage the retarder (2) by adding fluid (46) to the rotor (20).

13. Method according to claim 12, further **characterised by** the step:
d) to release the first clutch element (54) while the second clutch element (56, 56') is actuated to connect the first and the second shafts (18, 22).

## Patentansprüche

1. Retarder (2) mit einer Kupplungseinrichtung (4), wobei die Kupplungseinrichtung (4) aufweist
eine erste Welle (18), die mit einem Rotor (20) des Retarders (2) verbunden ist,
eine zweite Welle (22), die dazu angeordnet ist, mit einer Antriebsquelle (1) in Eingriff zu treten, und
ein erstes Kupplungselement (54), das zwischen der ersten (18) und zweiten Welle (22) angeordnet ist,
**dadurch gekennzeichnet, dass**
ein zweites Kupplungselement (56; 56') zwischen der ersten (18) und zweiten Welle (22) angeordnet ist,
das erste Kupplungselement (54) eine Mehrscheibenkupplung ist, und
das zweite Kupplungselement (56; 56') eine formschlüssige Kupplung ist, wie etwa eine Klauenkupplung.

2. Retarder nach Anspruch 1,
**dadurch gekennzeichnet, dass** ein erster zentraler Kanal (76) in der ersten Welle (18) angeordnet ist, deren erster zentraler Kanal (76) dazu ausgeführt ist, ein Fluid zum Steuern des ersten Kupplungselements (54) zu beherbergen.

3. Retarder nach einem der vorhergehenden Ansprüche,
**dadurch gekennzeichnet, dass** das zweite Kupplungselement (56; 56') eine axial verschiebbare Hülse (58) aufweist, die mit Zähnen (60) versehen ist, die dazu ausgeführt sind, mit entsprechenden Zähnen (62) auf den ersten und zweiten Wellen (18, 22) in Eingriff zu treten.

4. Retarder nach einem der vorhergehenden Ansprüche,
**dadurch gekennzeichnet, dass** ein zweiter zentraler Kanal (78) in der ersten Welle (18) angeordnet ist, deren zweiter zentraler Kanal (78) dazu ausgeführt ist, ein Fluid zum Steuern des zweiten Kupplungselements (56; 56') zu beherbergen.

5. Retarder nach einem der vorhergehenden Ansprüche,
**dadurch gekennzeichnet, dass** die zweite Welle (22) mit Zähnen (24) zum Eingriff mit einem Kammrad (32) ausgerüstet ist, das in der Antriebsquelle (1) angeordnet ist.

6. Retarder nach Anspruch 5,
**dadurch gekennzeichnet, dass** die ersten und zweiten Kupplungselemente (56, 56', 58, 58') in der Längsrichtung der zweiten Welle (22) beidseits der Zähne (24) angeordnet sind.

7. Retarder nach einem der vorhergehenden Ansprüche,
**dadurch gekennzeichnet, dass** die zweite Welle (22) koaxial zur ersten Welle (18) angeordnet ist.

8. Retarder nach einem der vorhergehenden Ansprüche,
**dadurch gekennzeichnet, dass** die zweite Welle (22) gelagert ist, angeordnet auf der ersten Welle (18) mittels Wälzlagern (63).

9. Retarder nach einem der vorhergehenden Ansprüche,
**dadurch gekennzeichnet, dass** die ersten und zweiten Kupplungselemente (56, 56', 58, 58') in der Längsrichtung der zweiten Welle (22) beidseits der zweiten Welle (22) angeordnet sind.

10. Retarder nach einem der vorhergehenden Ansprüche,
**dadurch gekennzeichnet, dass** die Antriebsquelle das Fahrzeug (1) ist.

11. Fahrzeug (1),
**dadurch gekennzeichnet, dass** es einen Retarder (2) nach einem der vorhergehenden Ansprüche umfasst.

12. Verfahren zum Verbinden eines Retarders (2), wobei der Retarder aufweist
eine erste Welle (18), die mit einem Rotor (20) des Retarders (2) verbunden ist,
eine zweite Welle (22), die dazu angeordnet ist, mit einer Antriebsquelle (1) in Eingriff zu treten, und
ein zwischen der ersten (18) und zweiten Welle (22) angeordnetes erstes Kupplungselement (54), das eine Mehrscheibenkupplung ist,
wobei das Verfahren **gekennzeichnet ist durch** die Schritte:
a) Betätigen des ersten Kupplungselements (54), so dass die zweite Welle (22) die erste Welle (18) dazu bringt, mit derselben Drehzahl wie die zweite Welle (22) zu rotieren,
b) Betätigen eines zweiten Kupplungselements (56, 56'), das eine formschlüssige Kupplung wie etwa eine Klauenkupplung ist und die ersten und zweiten Wellen (18, 22) verbindet, und
c) in Eingriff bringen des Retarders (2) durch Hinzufügen von Fluid (46) zum Rotor (20).

13. Verfahren nach Anspruch 12, ferner **gekennzeichnet durch** den Schritt:
d) Lösen des ersten Kupplungselements (54), während das zweite Kupplungselement (56, 56') betätigt ist, um die ersten und zweiten Wellen (18, 22) zu verbinden.

## Revendications

1. Ralentisseur (2) comprenant un dispositif d'embrayage (4), ledit dispositif d'embrayage (4) comprenant
un premier arbre (18), qui est raccordé à un rotor (20) du ralentisseur (2) ;
un deuxième arbre (22), qui est agencé pour venir en prise avec une source d'entraînement (1) ; et
un premier élément d'embrayage (54) agencé entre les premier et deuxième arbres (18, 22) ;
**caractérisé en ce que**
un deuxième élément d'embrayage (56 ; 56') est agencé entre les premier et deuxième arbres (18, 22) ; le premier élément d'embrayage (54) est un embrayage multidisques ; et
le deuxième élément d'embrayage (56 ; 56') est un embrayage à forme liée, tel qu'un embrayage à griffes.

2. Ralentisseur selon la revendication 1, **caractérisé en ce qu'**un premier canal central (76) est agencé dans le premier arbre (18), dont le premier canal central (76) est conçu pour loger un fluide pour commander le premier élément d'embrayage (54).

3. Ralentisseur selon l'une quelconque des revendications précédentes, **caractérisé en ce que** le deuxième élément d'embrayage (56 ; 56') comprend un manchon déplaçable axialement (58), qui est équipé de dents (60) qui sont adaptées pour venir en prise avec des dents correspondantes (62) sur les premier et deuxième arbres (18, 22).

4. Ralentisseur selon l'une quelconque des revendications précédentes, **caractérisé en ce qu'**un deuxième canal central (78) est agencé dans le premier arbre (18), dont le deuxième arbre central (78) est conçu pour loger un fluide pour commander le deuxième élément d'embrayage (56 ; 56').

5. Ralentisseur selon l'une quelconque des revendications précédentes, **caractérisé en ce que** le deuxième arbre (22) est équipé de dents (24) pour venir en prise avec une roue dentée (32) agencée dans la source d'entraînement (1).

6. Ralentisseur selon la revendication 5, **caractérisé en ce que** les premier et deuxième éléments d'embrayage (56, 56', 58, 58') sont agencés de chaque côté des dents (24) dans la direction longitudinale du deuxième arbre (22).

7. Ralentisseur selon l'une quelconque des revendications précédentes, **caractérisé en ce que** le deuxième arbre (22) est agencé coaxialement au premier arbre (18).

8. Ralentisseur selon l'une quelconque des revendications précédentes, **caractérisé en ce que** le deuxième arbre (22) est tourillonés, disposé sur le premier arbre (18) par l'intermédiaire de paliers à roulement (63).

9. Ralentisseur selon l'une quelconque des revendications précédentes, **caractérisé en ce que** les premier et deuxième éléments d'embrayage (56, 56', 58, 58') sont agencés de chaque côté du deuxième arbre (22) dans la direction longitudinale du deuxième arbre (22).

10. Ralentisseur selon l'une quelconque des revendications précédentes, **caractérisé en ce que** la source d'entraînement est le véhicule (1).

11. Véhicule (1), **caractérisé en ce qu'**il comprend un ralentisseur (4) selon l'une quelconque des revendications précédentes.

12. Procédé de raccordement d'un ralentisseur (2), le ralentisseur comprenant
un premier arbre (18), qui est raccordé à un rotor (20) du ralentisseur (2) ;
un deuxième arbre (22), qui est agencé pour venir en prise avec une source d'entraînement (1) ; et
un premier élément d'embrayage (54) agencé entre les premier et deuxième arbres (18, 22) ; qui est un embrayage multidisques ;
**le procédé étant caractérisé par** les étapes :
a) pour actionner le premier élément d'embrayage (54), de sorte que le deuxième arbre (22) amène le premier arbre (18) à tourner à la même vitesse que le deuxième arbre (22) ;
b) pour actionner un deuxième élément d'embrayage (56, 56'), qui est un embrayage à forme liée, tel qu'un embrayage à griffes, et raccorde les premier et deuxième arbres (18, 22), et
c) pour mettre en prise le ralentisseur (2) en ajoutant du fluide (46) au rotor (20).

13. Procédé selon la revendication 12, **caractérisé en outre par** l'étape :
d) pour libérer le premier élément d'embrayage (54) tandis que le deuxième élément d'embrayage (56, 56') est actionné pour raccorder le premier et le deuxième arbre (18, 22).
